# EUROPEAN PATENT SPECIFICATION

(11) **EP 3 232 042 B1**
(45) Date of publication and mention of the grant of the patent: **03.04.2019**
(21) Application number: 15878891.9
(22) Date of filing: 29.10.2015
(51) Int. Cl.: F02K 9/64, B22F 3/105, B22F 3/16, B22F 7/04, C23C 26/00, C23C 28/00, C25D 7/04, F02K 9/62, F02K 9/97

(54) **METHOD FOR MANUFACTURING COMBUSTOR OF ROCKET ENGINE, COMBUSTOR OF ROCKET ENGINE, AND ROCKET ENGINE**
VERFAHREN ZUR HERSTELLUNG EINER BRENNKAMMER EINES RAKETENTRIEBWERKS, BRENNKAMMER EINES RAKETENTRIEBWERKS UND RAKETENTRIEBWERK
PROCÉDÉ DE FABRICATION D'UNE CHAMBRE DE COMBUSTION DE MOTEUR DE FUSÉE, CHAMBRE DE COMBUSTION DE MOTEUR DE FUSÉE ET MOTEUR DE FUSÉE

(30) Priority: 23.01.2015 JP 2015011787
(43) Date of publication of application: 18.10.2017
(73) Proprietor: Mitsubishi Heavy Industries, Ltd., Tokyo 108-8215 (JP)
(72) Inventor: TAKAHASHI Takayuki, Tokyo 108-8215 (JP); TSUZUKI Tamaki, Tokyo 108-8215 (JP); KAJIMA Kazuhiro, Tokyo 108-8215 (JP)
(74) Representative: Henkel, Breuer & Partner
(86) International application number: PCT/JP2015/080612
(87) International publication number: WO 2016/117202

(56) References cited:
- EP-A2- 2 093 409
- WO-A1-95/29785
- WO-A1-2007/030038
- WO-A1-2008/076006
- JP-A- S6 082 602
- JP-A- S62 250 104
- US-A- 4 582 678
- US-A- 5 075 966
- US-B1- 6 516 872

## Description

### Technical Field

The present invention relates to a method of manufacturing a combustor of a rocket engine, a combustor of a rocket engine and a rocket engine.

### Background Art

The wall of a combustion chamber of a rocket engine becomes hot by heat generated by the combustion of fuel. To prevent the wall of the combustion chamber from being damaged with the heat generated by the combustion of fuel, there is a case that a cooling mechanism is provided adjacent to the combustion chamber. The cooling mechanism has a cooling passage through which the cooling medium passes.

Hoop load (tensile load acting along a circumferential direction of the wall of the combustion chamber) acts on the wall of the combustion chamber of the rocket engine by the heat and pressure generated by the combustion of fuel. Also, the pressure of the cooling medium which flows through the cooling passage acts on the wall of the combustion chamber of the rocket engine. Therefore, it is requested that the wall of the combustion chamber of the rocket engine can withstand the hoop load and the pressure of the cooling medium.

As the related techniques, JP S60-82602 A discloses a method of manufacturing an outer tube of a rocket combustor. In the method disclosed in JP S60-82602 A, filler is first filled in a cooling ditch of the inner tube. Second, a compression molding layer of a mixing powder which contains copper powder is formed around the inner tube after the filler is filled. Third, the compression molding layer is made by the sintering. Fourth, a nickel electroforming layer is formed as a reinforcing layer outside the sintered compression molding layer.

Also, JP S62-250104 A discloses a method of manufacturing an outer tube of a combustion chamber. In the method disclosed in the JP S62-250104 A, a plating layer is first formed on an outer circumferential surface of an inner tube having cooling passages by an electroforming method. Second, a reinforcing outer tube is arranged to cover the inner tube. Third, a brazing material and metal powder are filled between the inner tube and the reinforcing outer tube. Fourth, the inner tube and the reinforcing outer tube are bonded by heating in a brazing furnace.

Also, JP S60-82603 A discloses a method of manufacturing a rocket combustor. In JP S60-82603 A, it is described that a brazing method, an electroforming method, a powder metallurgy method, a diffusion bonding method and so on are known as a method of bonding an inner tube and an outer tube.

US 6516872 B1 discloses a rocket engine and a method of manufacturing the same. The method comprises a step of preparing an inner tube having channels, a step of providing an outer layer on an outer circumferential surface of the inner tube, and a step of stacking an outer envelope by thermal spraying on the outer layer. Further, the step of providing the outer layer includes depositing a copper-based alloy and depositing a layer of porous copper on the copper-based alloy.

WO 95/29785 A1 discloses a rocket engine thrust chamber including a wall assembly. The wall assembly includes a structural jacket and cooling channels arranged adjacent to the jacket. The cooling channels are joined to each other and to the internal surface of the jacket by laser powder injection of filler material. In the laser powder injection process the focal point is not on the surface of the cooling channels, but at a point slightly above the surface of the cooling channels to be joined.

### Summary of the Invention

An object of the present invention is to provide a combustor of a rocket engine which is possible to manufacture in lower cost and which withstands hoop load and pressure of cooling medium, a rocket engine and a method of manufacturing the combustor of the rocket engine.

A method of manufacturing a combustor of a rocket engine according to the present invention includes the features of claim 1.

A combustor of a rocket engine according to the present invention includes the features of claim 11.

A rocket engine according to the present invention is a rocket engine having the combustor described above.

According to the present invention, there are provided with the combustor of the rocket engine which can be manufactured in lower cost, and withstands the hoop load and the pressure of the cooling medium, the rocket engine, and the method of manufacturing the combustor of the rocket engine.

### Brief Description of the Drawings

The attached drawings are incorporated into this Specification to help explanation of embodiments. Note that the drawings should not be interpreted to limit the present invention to examples shown in the drawings and explained examples.
[FIG. 1]

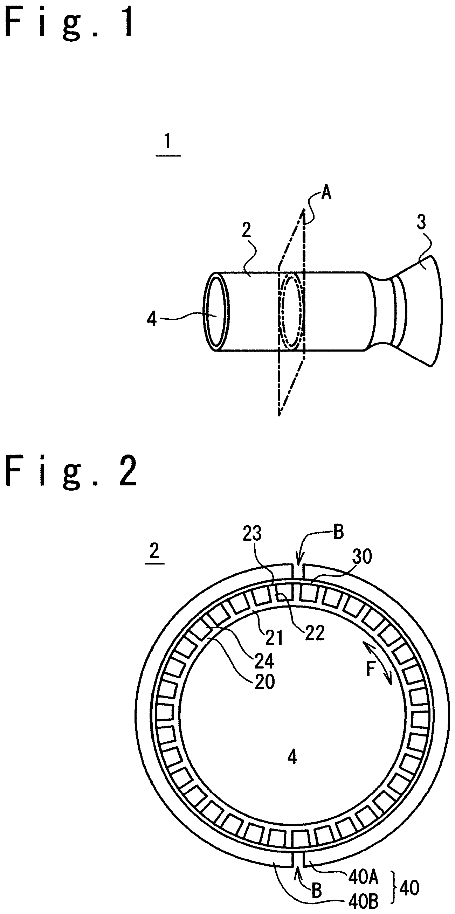

   FIG. 1 is a schematic perspective view of a rocket engine.
[FIG. 2]
   FIG. 2 is a sectional view of the rocket engine along a plane A in FIG. 1.
[FIG. 3]

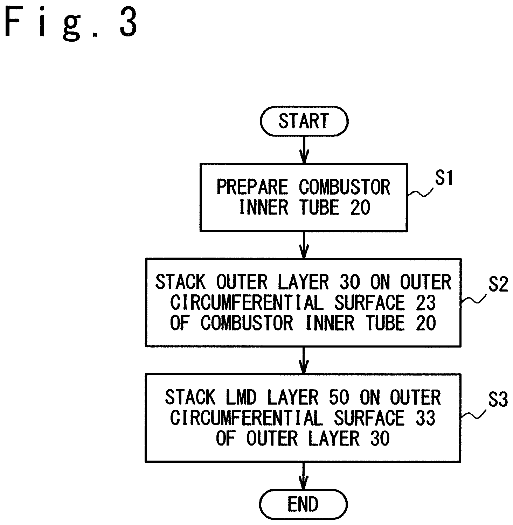

   FIG. 3 is a flow chart showing a method of manufacturing the combustor of the rocket engine.
[FIG. 4]

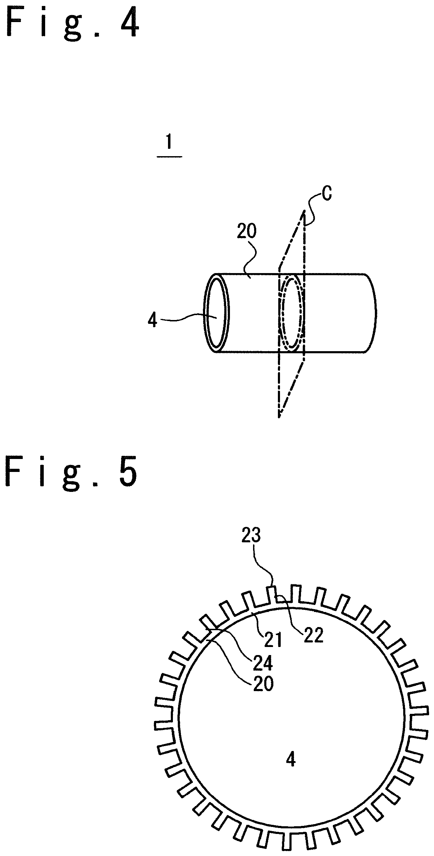

   FIG. 4 is a schematic perspective view of a combustor inner tube.
[FIG. 5]
   FIG. 5 is a sectional view of the combustor inner tube along a plane C in FIG. 4.
[FIG. 6]

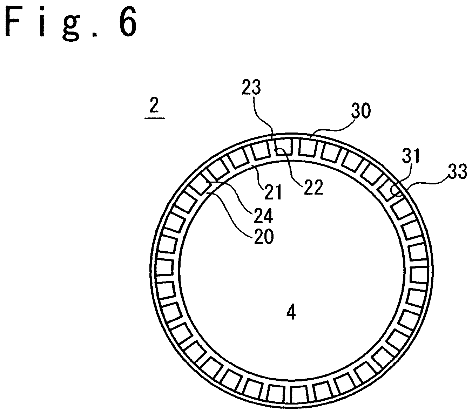

   FIG. 6 is a sectional view of an inner tube and an outer layer showing the state of the inner tube after the outer layer is stacked.
[FIG. 7]

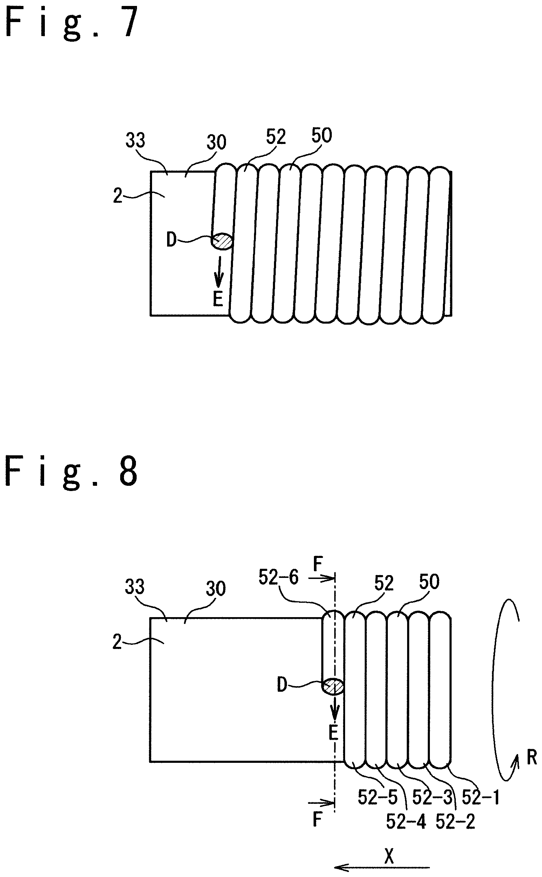

   FIG. 7 is a plan view of the combustor and is a diagram schematically showing a state during executing an LMD process.
[FIG. 8]
   FIG. 8 is a plan view of the combustor and is a diagram schematically showing the state during executing the LMD process.
[FIG. 9]

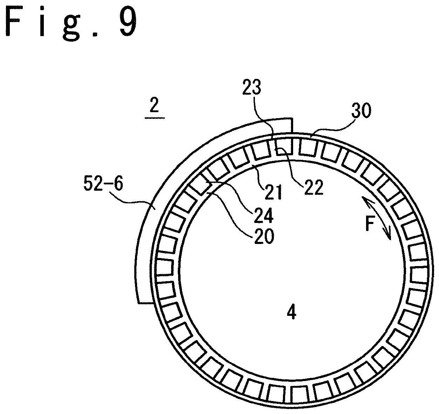

   FIG. 9 is a sectional view of the combustor viewed in the direction of F-F arrows of FIG. 8.
[FIG. 10]

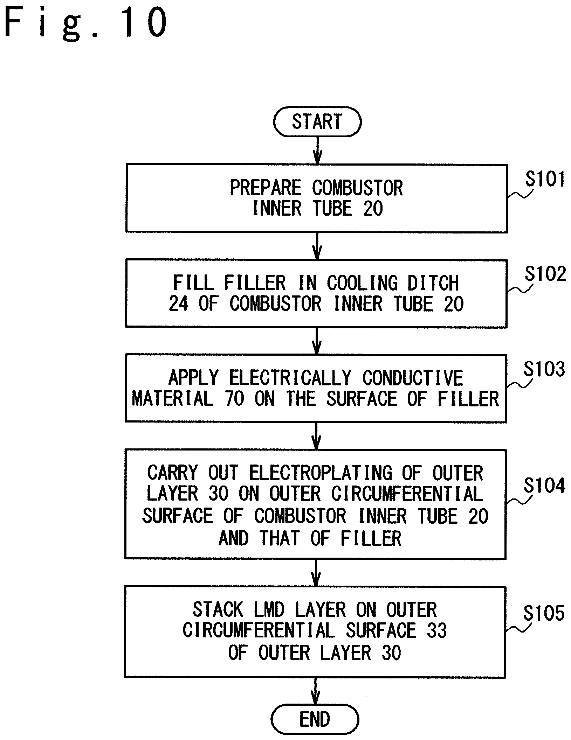

   FIG. 10 is a flow chart showing a method of manufacturing the combustor of the rocket engine.
[FIG. 11]

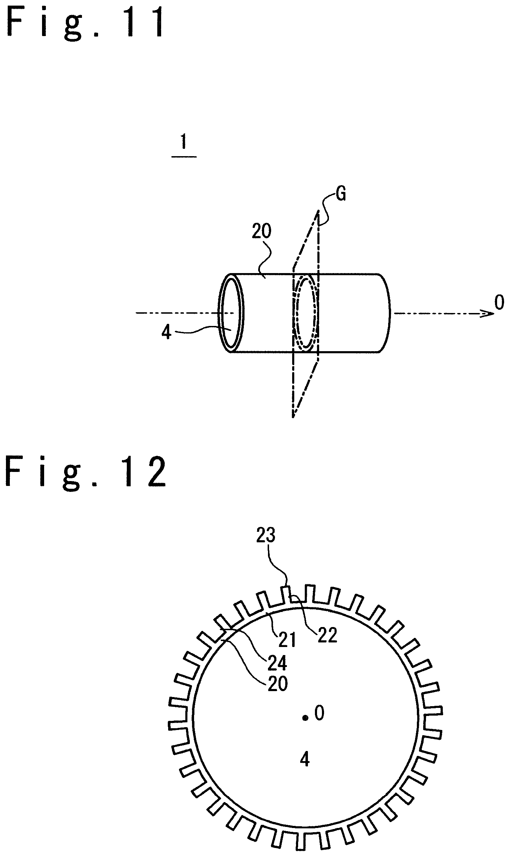

   FIG. 11 is a schematic perspective view of the combustor inner tube.
[FIG. 12]
   FIG. 12 is a sectional view of the combustor inner tube of FIG. 11 along a plane G.
[FIG. 13]

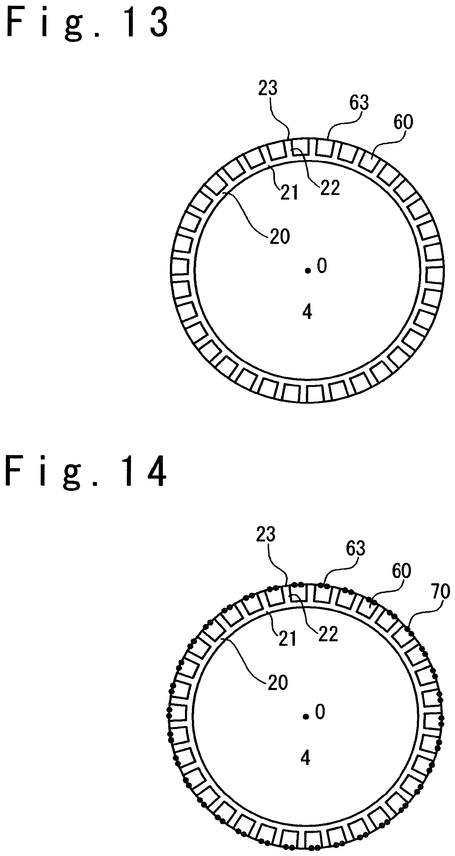

   FIG. 13 is a sectional view of the inner tube showing the state after the filler is filled in cooling ditches.
[FIG. 14]
   FIG. 14 is a sectional view of the inner tube showing the state after an electrically conductive material is applied to the surface of the filler.
[FIG. 15]

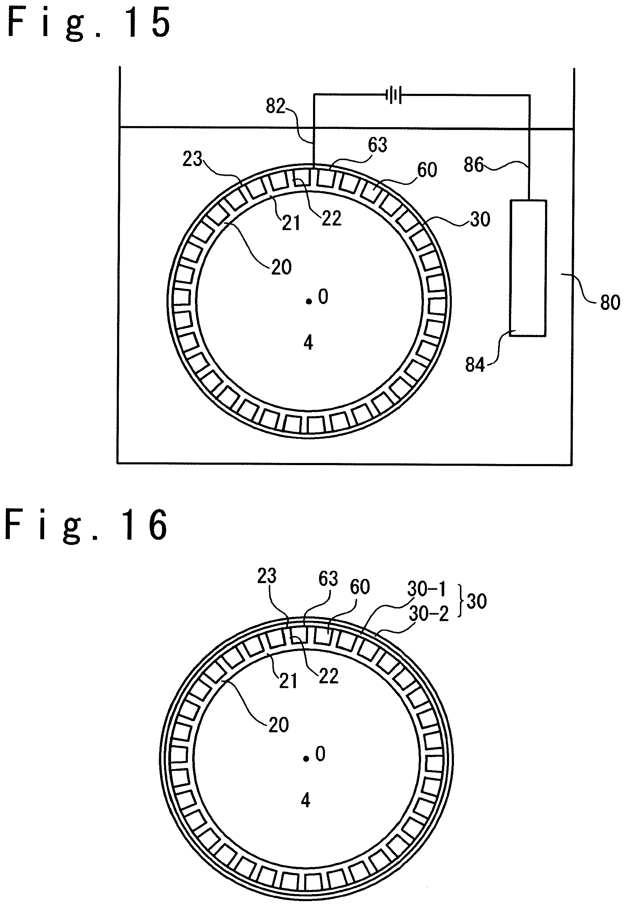

   FIG. 15 is a sectional view of the inner tube and the outer layer showing the state during executing an electroplating process.
[FIG. 16]
   FIG. 16 is a sectional view of the inner tube and the outer layer after the outer layer is stacked.
[FIG. 17]

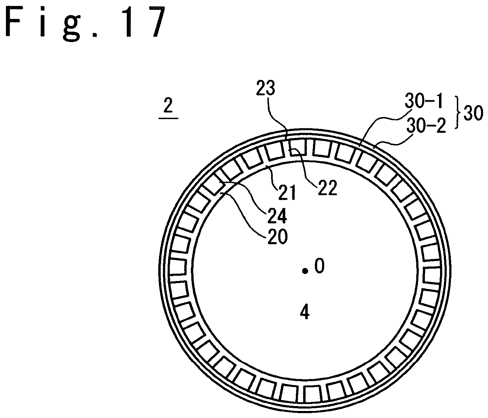

   FIG. 17 is a sectional view of the combustor after the filler is removed.
[FIG. 18]

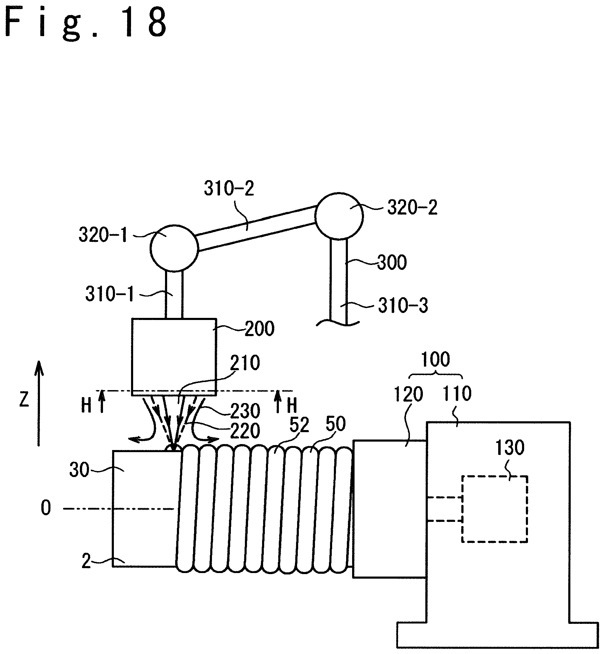

   FIG. 18 is a side view showing the state during executing an LMD process.
[FIG. 19]

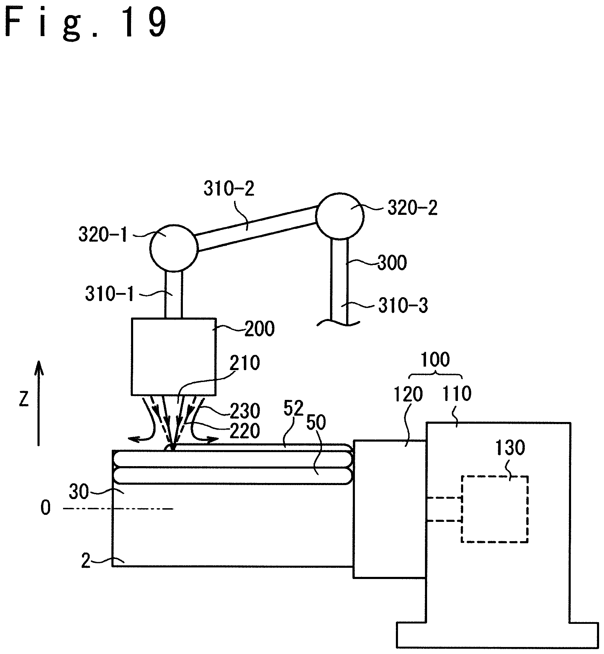

   FIG. 19 is a side view showing the state during executing the LMD process.
[FIG. 20]

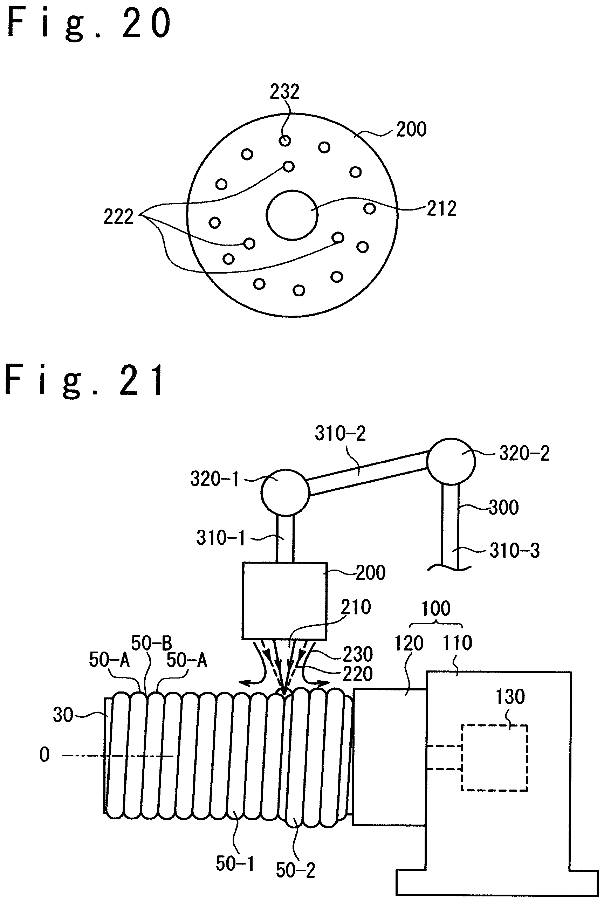

   FIG. 20 is a sectional view of FIG. 18 viewed from H-H arrow.
[FIG. 21]
   FIG. 21 is a side view showing the state during executing the LMD process.
[FIG. 22]

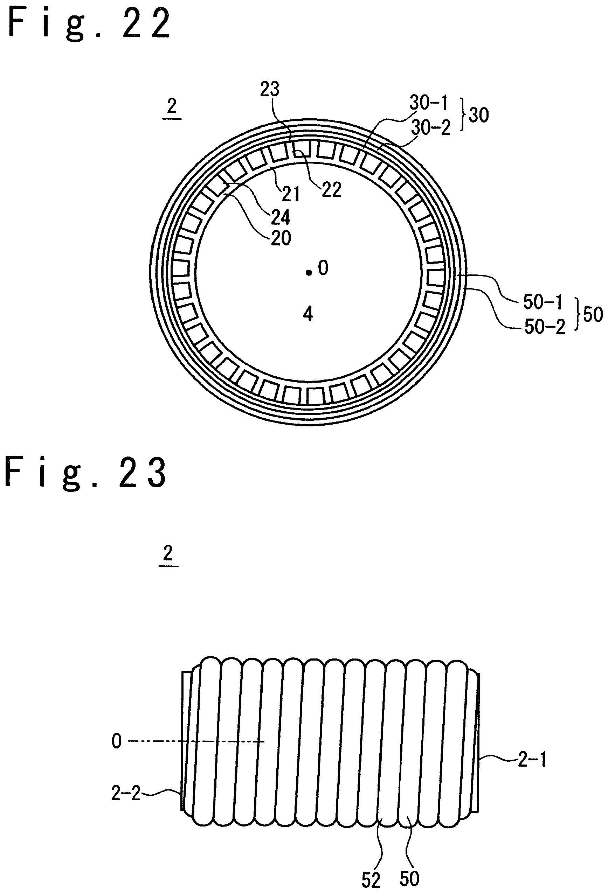

   FIG. 22 is a sectional view of the combustor after an LMD layer is formed.
[FIG. 23]
   FIG. 23 is a side view of the combustor after the LMD layer is formed.

### Description of the Embodiments

In the following detailed explanation, many detailed specific matters are disclosed for the purpose of explanation to provide the comprehensive understanding of embodiments. However, it would be apparent that one or plural embodiments are executable without these detailed specific matters. Hereinafter, the method of manufacturing the combustor of the rocket engine, the combustor of the rocket engine and the rocket engine will be described with reference to the attached drawings.

### (Definition of terms)

In this Specification, "LMD" means "Laser Metal Deposition", i.e., the stacking a metal material layer by using a laser.

In this Specification, an "LMD layer" means a layer stacked by using an LMD process.

In this Specification, a "copper layer" means a copper layer containing copper of 90 weight% or more or a copper alloy layer.

In this Specification, a "nickel layer" means a nickel layer containing nickel of 90 weight% or more or a nickel alloy layer.

In this Specification, a "nickel-based alloy layer" means a nickel alloy layer containing nickel of 50 weight% or more.

In this Specification, a "tensile strength" means a maximum tensile stress (N/mm²) which a material can withstand.

### (Problem recognized by inventors)

Referring to FIG. 1 and FIG. 2, a problem recognized by the inventors will be described. FIG. 1 is a schematic perspective view of a rocket engine. FIG. 2 is a sectional view of the rocket engine along a plane A shown in FIG. 1.

As shown in FIG. 1, the rocket engine 1 has a combustor 2 and a nozzle 3. The combustor 2 has a combustion chamber 4. Fuel is combusted in the combustion chamber 4. The combustion gas generated by the combustion of fuel is ejected into a rear direction of the nozzle 3. The rocket engine obtains a thrust as the reaction on ejection of the combustion gas in the rear direction of the nozzle.

FIG. 2 is a sectional view of the combustor 2 along a plane A in FIG. 1. The combustor 2 contains a combustor inner tube 20 (hereinafter, to be sometimes referred to as an "inner tube 20"), an outer layer 30 and a reinforcing layer 40.

The inner tube 20 has a bottom wall 21 and a plurality of side walls 22. Also, the inner tube 20 has cooling ditches 24 through which the cooling medium can pass.

The outer layer 30 is arranged on an outer circumferential surface 23 of the inner tube 20 to cover the cooling ditches 24. As a bonding method of the inner tube 20 and the outer layer 30, various methods are known. For example, the bonding method is a brazing method, an electroforming method, a powder metallurgy method, a diffusion bonding method and so on.

For example, the reinforcing layer 40 contains a first reinforcing part 40A and the second reinforcing part 40B. The first reinforcing part 40A and the second reinforcing part 40B are bonded to each other to form an annular body. The first reinforcing part 40A and the second reinforcing part 40B are bonded by, for example, carrying out electron beam welding to a part shown by an arrow B in FIG. 2. When carrying out the electron beam welding to the parts shown by the arrow B, the first reinforcing part 40A and the second reinforcing part 40B are welded to the outer layer 30, too.

By the way, the inner tube 20 is formed of a material having a high thermal conductivity to improve the cooling effect by the cooling medium which passes the cooling ditches 24 (the cooling passages). For example, the material having a high thermal conductivity is copper. Also, the hoop load F which is a tensile load acts on the inner tube 20 due to the heat and pressure generated by the combustion of fuel. Also, the pressure of the cooling medium which passes through the ditches 24 acts on the inner tube 20 and the outer layer 30.

In an example shown in FIG. 2, a reinforcing layer 40 is provided to restrain the transformation of the inner tube 20 and the outer layer 30 due to the hoop load F and the transformation of the inner tube 20 and the outer layer 30 due to the pressure of the cooling medium. The first reinforcing part 40A, the second reinforcing part 40B, and so on which configure the reinforcing layer 40 are generally manufactured by cutting a forged material. Therefore, the addition of the reinforcing layer 40 invites a great rise of a manufacturing cost. This is because the procurement cost of the forged material is high and the cutting cost is high. Also, because many chips are produced through the cutting, the yield of the material is low. Moreover, since the reinforcing layer 40 and the outer layer 30 are bonded only in a partial welding area (only a neighborhood area to a part shown by an arrow B), the transfer efficiency of the load to the reinforcing layer 40 from the outer layer 30 is low.

In order to restrain the transformation of the inner tube 20 and the outer layer 30 by hoop load F and the transformation of the inner tube 20 and the outer layer 30 by the cooling medium, it is possible to consider making the thickness of the outer layer 30 thick. For example, a case is considered where the outer layer 30 is formed by an electroforming process (a thick film electroplating process). If the time of the electroforming process is prolonged, the thickness of the outer layer 30 can be made thick. However, prolongation of the time of the electroforming process invites a rose of the manufacturing cost.

The inventors recognized as subject matters, to provide a method of manufacturing a combustor in a lower cost and to provide a combustor which has the strength to the hoop load and the pressure of the cooling medium.

Note that FIG. 1 and FIG. 2 are drawings temporarily used to explain the subject matter recognized by the inventors, and do not show any known technique prior to the present invention.

### (Overview of method of manufacturing combustor of rocket engine)

Referring to FIG. 3 to FIG. 9, the overview of the method of manufacturing the combustor of the rocket engine in the embodiment will be described. Note that in FIG. 3 to FIG. 9, a same reference numeral is allocated to a member that has the same function as the member shown in FIG. 1 and FIG. 2.

FIG. 3 is a flow chart showing the method of manufacturing the combustor of the rocket engine. FIG. 4 is a schematic perspective view of the inner tube 20. Note that in FIG. 4, the cooling ditches 24 are omitted. FIG. 5 is a sectional view of the cooling ditches shown in FIG. 4 along a plane C.

In a first process (S1), the combustor inner tube 20 having the cooling ditches 24 is prepared. The combustor inner tube 20 may be integrated with the inner tube of the nozzle (reference to the nozzle 3 of FIG. 1, if necessary) and so on and may be formed as a body different from the inner tube of the nozzle and so on. Here, the description is given under the condition that the combustor inner tube 20 is another body from the inner tube of the nozzle and so on.

The inner tube 20 has the bottom wall 21 and the plurality of side walls 22. Also, the inner tube 20 has a plurality of ditches 24. The ditches 24 are cooling ditches through which the cooling medium can pass. The inner tube 20 has an outer circumferential surface 23. More strictly, the outer circumferential surface 23 is the outer circumferential surface of the side wall 22. For example, the inner tube 20 is configured of a copper alloy containing copper of 99 weight% or more.

In a second process (S2), the outer layer 30 is stacked on the outer circumferential surface 23 of the inner tube 20 to cover the cooling ditches 24 of the inner tube 20. FIG. 6 is a sectional view showing the inner tube 20 after execution of the second process (S2). As a method of stacking the outer layer 30 on the inner tube 20, for example, a brazing method, an electroforming method, a powder metallurgy method, a diffusion bonding method and so on can be used. The outer layer 30 has an inner circumferential surface 31 and an outer circumferential surface 33.

The outer layer 30 may have a plurality of layers. The innermost layer of the outer layer 30 (in other words, a layer which faces the ditches 24) may be a copper layer. The outermost layer of the outer layer 30 may be a laser low reflectivity layer. In this case, the outer circumferential surface of the laser low reflectivity layer is an outer circumferential surface 33 of the outer layer 30. The laser low reflectivity layer is defined as a layer having a low reflectivity to the laser beam used in the LMD process, compared with a copper layer. Note that, for example, the wavelength of the laser beam used in the LMD process is in a range of 0.6 µm to 12 µm. Therefore, when the wavelength of the laser beam used in the LMD process is longer than 0.6 µm or shorter than 12 µm, the reflectivity of the laser low reflectivity layer to the laser beam having the wavelength of 0.6 µm to 12 µm is lower than the reflectivity of the copper layer to the laser beam of having the wavelength of 0.6 µm to 12 µm. More specifically, the reflectivity of the laser low reflectivity layer to the laser beam of at least one wavelength in the range of 0.6 µm to 12 µm is lower than the reflectivity of the copper layer to the laser beam of the at least one wavelength. For example, the reflectivity is a value obtained by dividing the reflected light intensity by an incident light intensity. The copper layer is a layer having a high reflectivity to the laser beam (for example, the laser beam in a range of wavelength equal to or longer than 0.6 µm), and is the layer of a high thermal conductivity. Therefore, it is difficult to directly apply the LMD process to the copper layer. Therefore, when the outer layer 30 contains the copper layer, it is desirable to stack the laser low reflectivity layer on the outer circumference surface of the copper layer. Note that the stacking of the laser low reflectivity layer may be carried out by plating.

In a third process (S3), the LMD layer 50 is stacked on the outer circumferential surface 33 of the outer layer 30 by the LMD process. FIG. 7 is a plan view of the combustor 2 and is a diagram schematically showing the state during executing the LMD process. In FIG. 7, the laser beam is irradiated to the area D shown by slanted lines, and the powder of the material configuring the LMD layer 50 is supplied to the area D shown by the slanted lines. The laser beam fuses the surface part of the outer layer 30 and the powder. By moving the area D (the irradiation position of the laser beam and the supply position of the powder) gradually along an arrow E, a bead 52 (ridge-like swelling part) is formed.

By forming the bead 52 along the surface of the outer layer 30 without any space, the LMD layer 50 is formed. The LMD layer 50 functions as the reinforcing layer which restrains the transformation of the inner tube 20 and the outer layer 30 by the hoop load. Also, the LMD layer 50 functions as the reinforcing layer which restrains the transformation of the inner tube 20 and the outer layer 30 by the pressure of the cooling medium.

Note that in an example shown in FIG. 7, the forming of bead 52 is carried out spirally. Alternatively, as shown in FIG. 8, the forming of bead 52 may be carried out annularly. In an example shown in FIG. 8, after the annular bead 52-1 is formed, the area D (the irradiation position of the laser beam and the supply position of the powder) is moved along the X direction as the longitudinal direction of the combustor 2. By moving the area D along the R direction as the circumferential direction of the combustor 2, the annular bead 52-2 is formed. In the same way, the annular beads 52-3, 52-4, 52-5, and 52-6 are formed. Note that FIG. 9 is a sectional view when viewed into a direction of the F-F arrows in FIG. 8.

In an example shown in FIG. 3 to FIG. 9, the LMD layer 50 as the reinforcing layer is formed by the LMD process. Therefore, the manufacturing cost of the reinforcing layer can be reduced, compared with a case where the reinforcing layer is formed by using the cutting of the forged material and the welding of the outer layer of the forged material. Also, the LMD layer 50 and the outer layer 30 are bonded over the whole boundary surface by the LMD process. Therefore, the transfer efficiency of the load to the LMD layer 50 (reinforcing layer) from the outer layer 30 is high.

Note that regarding the LMD process, conventionally, there are application examples to the repair of the member or the forming of a corrosion-resistant layer and so on. However, the technique of carrying out the LMD process to a member having high thermal conductivity such as the combustor of the rocket engine overrules the technical common sense of the LMD process. Also, considering that the main material of the combustor of the rocket engine is copper or copper alloy having a high reflectivity to the laser beam, to apply the LMD process which uses the laser beam to the combustor of the rocket engine overrules the technical common sense of the LMD process. Moreover, the high temperature and the high stress act on the combustor of the rocket engine. It is one which overrules the technical common sense of the LMD process to manufacture the structure material, on which the high temperature and the high stress act, by using the LMD process. Especially, that the reinforcing layer (outer tube) of the rocket engine combustor is formed by the LMD process overrules technical common sense that the reinforcing layer (outer tube) of the rocket engine combustor is formed by forging.

### (More detailed description of method of manufacturing combustor of rocket engine)

Referring to FIG. 10 to FIG. 21, the method of manufacturing the combustor of the rocket engine will be described in detail. In FIG. 10 to FIG. 21, a same reference numeral is allocated to a member having the same function as the member shown in FIG. 1 to FIG. 9.

FIG. 10 is a flow chart showing the method of manufacturing the combustor of the rocket engine. FIG. 11 is a schematic perspective view of the inner tube 20. Note that in FIG. 11, the cooling ditches 24 are omitted. FIG. 12 is a sectional view of FIG. 11 along a plane G.

In a first process (S101), the combustor inner tube 20 having the cooling ditches 24 is prepared. The combustor inner tube 20 may be integrated with the inner tube of the nozzle and so on (referring to the nozzle 3 of FIG. 1, if necessary) and may be formed as another body different from the inner tube of the nozzle and so on. Here, the description is given under the condition that the combustor inner tube 20 is formed as another body different from the inner tube of the nozzle.

For example, the inner tube 20 has the bottom wall 21 symmetrical with respect to the longitudinal center axis 0 of the inner tube 20. For example, the sectional shape perpendicular to the longitudinal center axis 0 of the bottom wall 21 is circular. The size of the internal diameter (the internal diameter of bottom wall 21) of the circle or the outer diameter (the outer diameter of bottom wall 21) may be changed along the direction of longitudinal center axis O. The inner tube 20 has a plurality of side walls 22 connected with the bottom wall 21. For example, the bottom wall 21 and the plurality of side walls 22 are integrated to a single member. The ditches 24 are formed from two neighboring side walls of the plurality of side walls 22 and the bottom wall 21. The inner tube 20 has a plurality of ditches 24 along the circumferential direction of the bottom wall 21. The ditch 24 is a cooling ditch through which the cooling medium can pass. For example, the cooling medium is cold fluid such as liquid-hydrogen. The inner tube 20 has the outer circumferential surface 23. More strictly, the outer circumferential surface 23 is the outer circumferential surface of the side wall 22. For example, the inner tube 20 is configured of copper alloy which contains copper of 99 weight% or more.

Next, a method of providing the outer layer 30 on the outer circumferential surface 23 of the inner tube 20 will be described. As the method of providing the outer layer 30, it is possible to adopt the brazing method, the electroforming method (the thick film electroplating method), the powder metallurgy method, the diffusion bonding method and so on. Also, the method of providing the outer layer on the outer circumferential surface of the inner tube may be another method other than the above methods. For example, when a cooling hole is directly formed by an electrolysis process and so on, the outer layer may be provided on the outer circumferential surface of the inner tube. Note that when the brazing method is adopted, there is a case that it is requested to apply a brazing material onto the bonded surface uniformly. When the powder metallurgy method is adopted, attention should be paid to the transformation of the inner tube in case of compression molding of powder. When the diffusion bonding method is adopted, attention should be paid in that the sizes of the bonded surfaces are requested to have a high precision such that the bonded surfaces can be bonded tightly. Here, the electroforming method (the electroplating method) with less constraint will be described in detail, compared with the brazing method, the powder metallurgy method, and the diffusion bonding method.

In the electroplating method, it is possible to set the thickness of the outer layer 30 freely.

The second process (S102) and the third process (S103) are a preparation process before executing the electroplating.

In the second process (S102), the cooling ditch 24 of the inner tube 20 is filled with the filler 60. The filler 60 is a material having a lower melting point than copper. For example, the filler 60 is wax. The filling of the filler 60 into the ditches 24 is carried out by, for example, immersing the whole inner tube 20 in the bathing of the filler in the fusion state. A masking material may be given previously to a part where the filling with the filler 26 is unnecessary in the inner tube 20 (for example, the inner circumferential surface of the bottom wall 21 which faces the combustion chamber 4). By repeating a process which immerses the whole inner tube 20 in the bathing of the filler and a process of taking out the inner tube 20 from the bathing of the filler, the filler 60 is filled into the ditches 24. After filling of the filler 60 into the ditches 24, excess filler 60 adhered to the inner tube 20 is removed from the inner tube 20.

FIG. 13 is a sectional view of the inner tube 20 showing a state after execution of the second process (S102). FIG. 13 shows the state after the excess filler 60 is removed. In FIG. 13, the outer circumferential surface 63 of the filler 60 and the outer circumferential surface 23 of the inner tube (that is, the outer circumferential surface 23 of the side wall 22) are flush. The outer circumferential surface 23 of the inner tube (that is, the outer circumferential surface 23 of the side wall 22) is not covered with the filler 60. In other words, a base material (copper or copper alloy and so on) is exposed in the outer circumferential surface 23 of the inner tube.

When the filler 60 is electrically nonconductive material, an electrically conductive material 70 must be applied to the surface of the filler 60. It is difficult to carry out electroplating to the surface of the electrically nonconductive material. As the application of electrically conductive material 70, for example, silver powder is applied to the surface of the filler 60. Note that the silver powder may be applied to the outer circumferential surface 23 of the inner tube (that is, the outer circumferential surface 23 of the side wall 22), or may not be applied. The third process (S103) is a process of applying electrically conductive material 70 to the surface of the filler 60. Note that when the filler 60 is an electrically conductive material, the third process (S103) can be omitted. FIG. 14 is a sectional view of the inner tube 20 showing a state after execution of the third process (S103).

The fourth process (S104) is an electroplating process. FIG. 15 is a sectional view of the inner tube 20 and the outer layer 30 showing the state during executing the fourth process (S104). In the fourth process (S104), the outer layer 30 is electroplated on the outer circumferential surface 23 of the inner tube and an outer circumferential surface 63 of the filler. The fourth process (S104) is carried out, for example, by immersing the inner tube 20 in which the filler 60 has been filled, into the plating bath 80. The inner tube 20 functions as a first electrode 82. For example, the inner tube 20 is connected with a wiring line 82 on the cathode side. The plating material 84 functions as a second electrode. For example, the plating material 84 is connected with a wiring line 86 on the anode side. By applying a voltage between the first electrode and the second electrode (in other words, by applying the voltage between the inner tube 20 and the plating material 84), the outer layer 30 is laminated or stacked on the outer circumferential surface 23 of the inner tube 20. The outer layer 30 is stacked on the outer circumferential surface 63 of the filler 60. Note that a masking material may be applied previously to an area where the electroplating is unnecessary, of the surface of the inner tube 20.

The outer layer 30 may contain a plurality of layers. In the fourth process (S104), a first layer 30-1 (the innermost layer) may be stacked on the outer circumferential surfaces of the inner tube 20 and the filler 60 by the electroforming, and after that, a second layer 30-2 (the outermost layer) may be stacked on the outer circumferential surface of the first layer by the electroforming. Note that the outer circumferential surface of the first layer is made smooth by carrying out a surface process of the outer circumferential surface after the first layer is stacked and a before the second layer is stacked.

Note that a singular intermediate layer or a plurality of intermediate layers may be arranged between the first layer 30-1 and the second layer 30-2. The material of the intermediate layer may be identical with the material of the first layer 30-1, and may be different from the material of the first layer 30-1. The material of the intermediate layer may be identical to that of the second layer 30-2 and may be different from the material of the second layer 30-2. The first layer 30-1, the second layer 30-2, and the intermediate layer are formed by electroplating.

FIG. 16 is a sectional view of the inner tube 20 after the outer layer 30 is stacked which contains the first layer 30-1 and the second layer 30-2. The inner circumferential surface of the first layer 30-1 is bonded to the outer circumferential surface 23 of the inner tube 20. The inner circumference surface of the second layer 30-2 is bonded to the outer circumferential surface of the first layer 30-1. In an example shown in FIG. 16, the first layer 30-1 (the innermost layer) is a copper layer (containing a copper alloy layer), and the second layer 30-2 (the outermost layer) is a nickel layer (containing a nickel alloy layer). Note that a singular layer or a plurality of intermediate layers may be arranged between the first layer 30-1 and the second layer 30-2.

The cooling passage through which the cooling medium passes is configured by the inner circumferential surface (the surface which faces the ditch 24) of the first layer 30-1, the side surfaces (the surfaces which faces the ditch 24) of the side wall 22 of the inner tube, and the outer surface (the surface which faces the ditch 24) of the bottom wall 21. From the viewpoint of corrosion-resistance to the cooling medium, the first layer 30-1 (the innermost layer) is configured of the corrosion-resistant material to the cooling medium. For example, the first layer 30-1 is a copper layer (containing a copper alloy layer) which is a corrosion-resistant material layer. In other words, the first layer 30-1 is a copper electroforming layer. For example, the copper layer has a higher corrosion resistance to the cooling medium than a nickel layer.

The tensile strength of copper layer (the tensile strength of the copper or copper alloy of the copper layer) is relatively small. Therefore, when a hoop load is supported by the copper layer, the thickness of the copper layer must be made thick. To make the thickness of the copper layer thick, it should prolong the time of the electroforming process. However, the increase of the electroforming process time causes a rise of the manufacturing cost. To restrain the increase of the electroforming process time, a high strength layer having a large tensile strength may be arranged as an intermediate layer or second layer. In this Description, the high strength layer means a layer formed of a material having the greater tensile strength than the tensile strength of copper. By arranging the high strength layer, the thickness of the copper layer which is the first layer 30-1 can be made thin. Also, by arranging the high strength layer, the thickness of the whole outer layer 30 can be made thin. By making the thickness of the whole outer layer 30 thin, the increase of the electroforming process time is restrained.

For example, the high strength layer is a nickel layer (containing a nickel alloy layer). Note that the nickel layer is a low reflectivity layer having the low reflectivity to the laser beam used in the LMD process. Therefore, from the viewpoint of the following LMD process, it is desirable to set a nickel layer as the outermost layer of the outer layer 30. When the nickel layer of the high strength layer is set as the outermost layer of the outer layer 30, the synergy effect is provided that the thickness of the whole outer layer 30 can be made thin and the LMD process becomes easy.

When the outer layer 30 contains the high strength layer, for example, the thickness of the copper layer which is the first layer 30-1 can be set to a range of 0.5 mm to 4 mm.

Optionally and additionally, the outer circumferential surface of the outermost layer may be smoothed by carrying out surface processing to the outer circumferential surface of the outermost layer (second layer 30-2) of the outer layer before implementing the fifth process and after implementing the fourth process.

Optionally and additionally, the filler 60 may be removed from the cooling ditches 24 before implementing the fifth process after implementing the fourth process. The removal of the filler 60 is carried out by, for example, heating the inner tube 20 to fuse the filler 60. The filler 60 in the fusion state is removed from the cooling ditches 24. Note that the removal of the filler 60 may be executed before the smoothing of the outer circumferential surface of the outermost layer of the outer layer 30 or may be executed after the smoothing of the outer circumferential surface of the outermost layer of the outer layer 30. FIG. 17 is a sectional view of the combustor 2 after the filler 60 is removed.

The fifth process (S105) is the LMD process. The fifth process is a process of stacking the LMD layer 50 as the high strength layer on the outer circumferential surface of the outermost layer (second layer 30-2) of the outer layer 30. The tensile strength of the LMD layer 50 is larger than the tensile strength of the copper layer as the first layer 30-1 of the outer layer 30. FIG. 18 is a side view showing the state during executing the LMD process of the fifth process (S105).

In the LMD process, the combustor 2 is supported by the support apparatus 100. The combustor 2 is supported by the support apparatus 100 to be rotatable around a longitudinal center axis O of the combustor 2. For example, the support apparatus 100 has a proximal base 110 and a rotating body 120. The proximal base 110 supports the combustor 2 through the rotating body 120. The rotating body 120 holds the combustor 2 by a suitable fixation mechanism (e.g. a chuck). The rotation axis of the rotating body 120 coincides with the longitudinal center axis O of the combustor 2. The support apparatus 100 has a driving source 130 such as a motor. The rotating body 120 is rotated by use of the power of the driving source 130.

The LMD process is executed by an LMD apparatus 200. The LMD apparatus 200 is installed to an LMD apparatus moving apparatus 300. The LMD apparatus moving apparatus 300 can move the LMD apparatus 200 in a direction along the longitudinal center axis O of the combustor 2 at least. Additionally, the LMD apparatus moving apparatus 300 may be able to move the LMD apparatus 200 to the radial direction of the combustor 2 (the Z direction in FIG. 18). In an example shown in FIG. 18, the LMD apparatus moving apparatus 300 is a manipulator. The manipulator has, for example, a plurality of arms (310-1, 310-2, and 310-3) and one or more pivots (320-1, and 320-2) which link the plurality of arms to be rotatable.

In the LMD process, the spiral bead 52 can be formed on the outer circumferential surface of the outer layer 30 by rotating the combustor 2 around the longitudinal center axis 0 and by moving the LMD apparatus 200 to the direction along the longitudinal center axis O. Alternatively, in the LMD process, it is possible to form annular beads (referring to the annular beads 52 of FIG. 8, if necessary) on the outer circumferential surface of the outer layer 30, by rotating the combustor 2 around the longitudinal center axis O and by holding the position of the LMD apparatus 200

Alternatively, as shown in FIG. 19, in the LMD process, the linear bead 52 in the direction along the longitudinal center axis 0 may be formed on the outer circumferential surface of the outer layer 30 by moving the LMD apparatus 200 to the direction along the longitudinal center axis O in the condition that the position of the rotating body 120 is fixed. Note that from the viewpoint of supporting the hoop load (the load in the direction along the circumferential direction of the combustor 2), it is desirable that the spiral bead or the annular beads are formed, compared with a case of the linear bead. Also, from the viewpoint of a moving speed of zero or a low moving speed of the LMD apparatus 200, it is desirable to form the spiral bead or the annular bead compared with the formation of the linear bead.

The LMD apparatus 200 has an irradiation port for irradiating a laser beam 210, an injection port for injecting the fine powder 220, and a supply port for supplying a shield gas 230. The laser beam 210 gives energy of fusing the powder 220 and a surface part of the outer layer 30 to the powder 220 and the surface part of the outer layer 30. The powder 220 is raw material to form the LMD layer. The shield gas 230 is an inactive gas supplied to restrain the oxidation of the fusion material (in other words, the fusion material formed by fusing the powder 220 and the surface part of the outer layer 30).

FIG. 20 is a sectional view of the LMD apparatus 200 (sectional view viewed in the direction of the H-H arrows in FIG. 18). In an example shown in FIG. 20, the irradiation port 212 for irradiating the laser beam and a plurality of injection ports 222 for injecting the powder 220 are arranged concentrically. In the example shown in FIG. 20, the plurality of injection ports 222 are arranged to surround the irradiation port 212. By arranging the irradiation port 212 and the injection ports 222 concentrically, the powder 220 is stably supplied for the irradiation region of the laser beam 210. As a result, the shape of the bead to be formed becomes stable.

Also, in the example shown in FIG. 20, the plurality of injection ports 222 for injecting the powder 220 and the supply ports 232 for supplying the shield gas are arranged concentrically. In the example shown in FIG. 20, a plurality of supply ports 232 are arranged to surround the plurality of injection ports 222. The plurality of supply ports 232 may be substituted by one annular supply port. The shield gas (e.g. argon gas) such as inactive gas is supplied from the supply ports 232 of the LMD apparatus 200 arranged to surround the irradiation region of the laser beam.

The LMD apparatus 200 irradiates the laser beam 210 for the outer layer 30. The laser beam 210 is focused on the outer layer 30 or in the neighborhood of the outer layer 30. The wavelength of the laser beam may be selected according to the material of powder 220, the material of the outermost layer of the outer layer 30 and so on. For example, the wavelength of the laser beam is from 1030 nm to 1100 nm. The LMD apparatus 200 injects the powder 220 for the region where the laser beam 210 is irradiated. The powder 220 and the surface part of the outer layer 30 in the region where the laser beam 210 is irradiated are fused with the energy of laser beam 210. The bead 52 is formed by solidifying the fusion material (in other words, the fusion material formed by fusing the powder 220 and the surface part of the outer layer 30).

Note that when the outermost layer of the outer layer 30 (in other words, the surface part of the outer layer 30) is the copper layer, there is a fear that the transfer of the energy to the outermost layer becomes insufficient, because the laser beam is reflected. Also, when the outermost layer of the outer layer 30 is the copper layer, the energy transferred to the outermost layer diffuses to the outside of the laser irradiation region since the copper layer is a high heat conductive material. Therefore, it has been considered that it is difficult to apply the LMD process to the manufacturing process of the combustor 2 formed of copper as a main material.

In the present embodiment, it is possible to execute the LMD process effectively by setting the outermost layer of the outer layer 30 to a laser low reflectivity layer.

The LMD layer 50 is a layer of the bead 52 formed by the LMD process. The LMD layer 50 is a high strength layer. The high strength layer means a layer formed of material having the tensile strength larger than the tensile strength of copper. For example, the LMD layer 50 which is the high strength layer is a nickel-based alloy layer. For example, the nickel-based alloy layer is a nickel-based heat resisting alloy layer of Inconel 625 ("Inconel" is a registered trademark) and Inconel 718 and so on. The LMD layer 50 can be made as the nickel-based alloy layer by preparing the powder 220 from the nickel-based alloy.

If an identical material is used for the main material of the LMD layer 50 (element having the maximum weight% in the LMD layer) and the main material of the laser low reflectivity layer (element having the maximum weight% of the laser low reflectivity layer), a quantity of the impurities in the LMD layer 50 can be reduced. That is, the LMD layer 50 is formed of a mixture of the material of the powder 220 and the material of the surface part of the outer layer 30. If the material of the laser low reflectivity layer in the surface part coincides with the material of the powder 220, the quantity of the impurities in the LMD layer 50 can be reduced. As a result, the decline of strength of the LMD layer is restrained. For example, the quantity of the impurities in the LMD layer 50 can be reduced by adopting the nickel layer as the laser low reflectivity layer and the nickel-based alloy as the material of powder 220. Note that the nickel layer is the laser low reflectivity layer and is the high strength layer.

For example, the process of stacking the LMD layer 50 is a process of stacking a plurality of the LMD layers. FIG. 21 is a side view showing the state during executing the LMD process of the fifth process (S105). FIG. 21 shows the state in which the second LMD layer 50-2 is stacked on the first LMD layer 50-1 after the first LMD layer 50-1 is stacked on the outer layer 30. The bead of the second LMD layer 50-2 may be formed in a valley section 50-B between a mountain section 50-A and a mountain section 50-A of the beads of the first LMD layer. By forming the bead (in other words, the bead of another LMD layer) of the next LMD layer in the valley section between the swelling sections of the bead of the LMD layer, the roughness (unevenness) in the surface of the LMD layer can be made small.

Alternatively or additionally, it is possible that the width of the bead of the second LMD layer 50-2 is made wider than that of the bead of the first LMD layer 50-1, and the height of the bead of the second LMD layer 50-2 is made higher than that of the bead of the first LMD layer 50-1. The material of the second LMD layer 50-2 is substantially the same as the material of the first LMD layer 50-1. By making the size of the bead of the second LMD layer 50-2 large (in other words, making the width and the height of the bead large), the time taken to form the LMD layer having a predetermined thickness can be reduced.

FIG. 22 is a sectional view of the combustor 2 after the LMD layers are formed by the LMD process. The combustor 2 includes the inner tube 20 having the cooling ditches 24. The outer layer 30 is arranged on the outer circumferential surface of the combustor inner tube 20 to cover the ditches 24 of the inner tube 20. In an example shown in FIG. 22, the first layer 30-1 as the innermost layer of the outer layer is the copper layer, and the second layer 30-2 as the outermost layer of the outer layer is a laser low reflectivity layer. Note that when the laser low reflectivity layer is a thin layer, the laser low reflectivity layer is fused in case of the LMD process so as to be integrated into the LMD layer 50. In this case, in the combustor 2 after the LMD layer is formed, the outer layer 30 does not contain the laser low reflectivity layer.

The LMD layer 50 is arranged on the outer circumferential surface of the outer layer 30. In an example shown in FIG. 22, the LMD layer 50 is formed form a plurality of layers which contain the first LMD layer 50-1 and the second LMD layer 50-2. The number of layers in the LMD layers is an optional integer equal to or more than one. Note that since one LMD layer and an LMD layer neighbor to the one LMD layer are integrated through the LMD process, there is a case that the number of layers in the LMD layer becomes unclear in the combustor 2 after the LMD layer is formed.

FIG. 23 is a side view showing the combustor 2 after the LMD layer 50 is formed by the LMD process. In an example shown in FIG. 23, the LMD layer 50 is not appropriately formed in the first end 2-1 and the second end 2-2 in the combustor 2. The first end 2-1 and the second end 2-2 in the combustor 2 may be cut or smoothed. The LMD layer 50 is distinguished by the existence of the bead 52. However, when the surface of the LMD layer 50 is smoothed, the existence of bead 52 sometimes becomes obscure.

In the embodiment, the LMD layer 50 which is a high strength layer is stacked on the outer circumferential surface of the outer layer 30 of the combustor by the LMD process. Therefore, the manufacturing cost and the manufacturing time are reduced, compared with a case of providing the high strength layer from the forged material. Also, a yield of the material is better, compared with a case of forming the high strength layer by cutting the forged material.

Also, since a laser is irradiated locally in the LMD process, the heat transformation of the material to be processed is smaller than the general welding process. Also, the outer layer 30 and the LMD layer 50 are integrated over the whole of contact surface of both layers in the LMD process. Therefore, the transfer efficiency of the load from the outer layer to the the LMD layer is high. Also, since the LMD layer functions as a load support layer, the thickness of the outer layer can be made thin. Optionally and additionally, when the outer layer is formed by the electroforming process, the thickness of the outer layer can be made thin, so that the process time of the electroforming process (the electroplating process) can be reduced.

Optionally and additionally, the thickness of the whole outer layer can be made thin by forming a part of the outer layer as an electroforming layer having high strength. Since the thickness of the whole outer layer can be made thin, the process time of the electroforming process (the electroplating process) can be reduced.

the whole outer layer can be made thin by forming a part of the outer layer as an electroforming layer having high strength. Since the thickness of the whole outer layer can be made thin, the process time of the electroforming process (the electroplating process) can be reduced.

Additionally, since the outermost layer of the outer layer is formed as the laser low reflectivity layer, the LMD process can be effectively executed.

Optionally and additionally, since the laser low reflectivity layer is formed as the high strength layer, it is possible to reduce the number of layers of the outer layer or to make the thickness of the outer layer thin. By reducing the number of layers of the outer layer, the manufacturing cost and the manufacturing time for forming the outer layer can be reduced. By making the thickness of the outer layer thin, the manufacturing cost and the manufacturing time for forming the outer layer can be reduced.

The present invention is not limited to each of the above embodiments, and it would be apparent that the embodiments are changed or modified appropriately in the range of the technical thought of the present invention as defined by the appended claims. Also, various techniques used in each of the embodiments or each of the modification examples can be applied to another embodiment or another modification example, unless the technical contradiction is caused.

## Claims

1. A method of manufacturing a combustor (2) of a rocket engine (1), comprising:
preparing a combustor inner tube (20) having cooling ditches (24);
providing an outer layer (30) on an outer circumferential surface (23) of the combustor inner tube (20) to cover the cooling ditches (24) of the combustor inner tube (20); and
stacking an LMD layer (50) on the outer circumferential surface (33) of the outer layer (30) by an LMD process,
wherein the step of providing an outer layer (30) comprises:
stacking a first layer (30-1) on the outer circumferential surface (23) of the combustor inner tube (20); and
stacking a laser low reflectivity layer as an outermost layer of the outer layer (30), and
wherein the laser low reflectivity layer is a layer having a reflectivity lower to a laser beam used in the LMD process than with the first layer (30-1).

2. The method of manufacturing a combustor (2) of a rocket engine (1) according to claim 1, wherein a tensile strength of the laser low reflectivity layer is greater than that of the first layer (30-1).

3. The method of manufacturing a combustor (2) of a rocket engine (1) according to claim 1 or 2, wherein the stacking a laser low reflectivity layer comprises stacking the laser low reflectivity layer by an electroplating method.

4. The method of manufacturing a combustor (2) of a rocket engine (1) according to any one of claims 1 to 3, wherein the laser low reflectivity layer is a nickel layer.

5. The method of manufacturing a combustor (2) of a rocket engine (1) according to any one of claims 1 to 4, wherein a main material of the laser low reflectivity layer and a main material of the LMD layer (50) are same.

6. The method of manufacturing a combustor (2) of a rocket engine (1) according to any one of claims 1 to 5, wherein the step of stacking a first layer comprises:
stacking the first layer (30-1) on the outer circumferential surface (23) of the combustor inner tube (20) by an electroforming process.

7. The method of manufacturing a combustor (2) of a rocket engine (1) according to any one of claims 1 to 6, wherein the first layer (30-1) is a copper layer.

8. The method of manufacturing a combustor (2) of a rocket engine (1) according to any one of claims 1 to 7, wherein the step of stacking the LMD layer (50) comprises:
stacking a first LMD layer (50-1) on the outer circumferential surface (33) of the outer layer (30) by the LMD process; and
stacking a second LMD layer (50-2) on the first LMD layer (50-1).

9. The method of manufacturing a combustor (2) of a rocket engine (1) according to any one of claims 1 to 8, wherein the LMD layer (50) comprises a spiral bead (52) or an annular bead (52-1,52-2,52-3,52-3,52-4,52-5,52-6).

10. The method of manufacturing a combustor (2) of a rocket engine (1) according to any one of claims 1 to 9, wherein the LMD layer (50) is a nickel-based alloy layer.

11. A combustor (2) of a rocket engine (1), comprising:
a combustor inner tube (20) having cooling ditches (24);
an outer layer (30) arranged on an outer circumferential surface (23) of the combustor inner tube (20) to cover the cooling ditches (24) of the combustor inner tube (20); and
an LMD layer (50) arranged on an outer circumferential surface (33) of the outer layer (30),
wherein the outer layer (30) comprises:
a first layer (30-1) arranged on the outer circumferential surface (23) of the combustor inner tube (20); and
a high strength layer arranged in contact with an inner circumferential surface of the LMD layer (50) and having a tensile strength larger than the first layer (30-1), and
wherein the first layer (30-1) is a copper layer, and the high strength layer is a nickel layer.

12. The combustor (2) of a rocket engine (1) according to claim 11, wherein a main material of the high strength layer and that of the LMD layer (50) are same.

13. A rocket engine (1) which comprises the combustor (2) of the rocket engine (1) according to any of claims 11 or 12.

## Patentansprüche

1. Ein Verfahren zum Herstellen einer Brennkammer (2) eines Raketentriebwerks (1), mit:
Vorbereiten eines Brennkammer-Innenrohrs (20) mit Kühlgräben (24),
Vorsehen einer äußeren Schicht (30) auf einer Außen-Umfangsoberfläche (23) des Brennkammer-Innenrohrs (20) zum Abdecken der Kühlgräben (24) des Brennkammer-Innenrohrs (20), und
Schichten einer LMD-Schicht (50) auf der Außen-Umfangsoberfläche (33) der äußeren Schicht (30) durch einen LMD-Prozess,
wobei der Schritt des Vorsehens einer äußeren Schicht (30) aufweist:
Schichten einer ersten Schicht (30-1) auf der Außen-Umfangsoberfläche (23) des Brennkammer-Innenrohrs (20), und
Schichten einer Schicht mit geringer Reflektivität gegenüber Laser als eine äußerste Schicht auf der äußeren Schicht (30), und
wobei die Schicht mit niedriger Reflektivität gegenüber Laser eine Schicht ist mit einer Reflektivität, die gegenüber einem in dem LMD-Prozess verwendeten Laserstrahl geringer ist als bei der ersten Schicht (30-1).

2. Das Verfahren zum Herstellen einer Brennkammer (2) eines Raketentriebwerks (1) gemäß Anspruch 1, wobei eine Zugfestigkeit der Schicht mit geringer Reflektivität gegenüber Laser größer ist als die der ersten Schicht (30-1).

3. Das Verfahren zum Herstellen einer Brennkammer (2) eines Raketentriebwerks (1) gemäß Anspruch 1 oder 2, wobei das Schichten einer Schicht mit niedriger Reflektivität gegenüber Laser ein Schichten der Schicht mit niedriger Reflektivität gegenüber Laser durch ein Elektroplattierungs- bzw. Galvanisierungs-Verfahren aufweist.

4. Das Verfahren zum Herstellen einer Brennkammer (2) eines Raketentriebwerks (1) gemäß einem der Ansprüche 1 bis 3, wobei die Schicht mit niedriger Reflektivität gegenüber Laser eine Nickelschicht ist.

5. Das Verfahren zum Herstellen einer Brennkammer (2) eines Raketentriebwerks (1) gemäß einem der Ansprüche 1 bis 4, wobei ein Hauptmaterial der Schicht mit geringer Reflektivität gegenüber Laser und ein Hauptmaterial der LMD-Schicht (50) dasselbe ist.

6. Das Verfahren zum Herstellen einer Brennkammer (2) eines Raketentriebwerks (1) gemäß einem der Ansprüche 1 bis 5, wobei der Schritt des Schichtens einer ersten Schicht aufweist:
Schichten der ersten Schicht (30-1) auf der Außen-Umfangsoberfläche (23) des Brennkammer-Innenrohrs (20) durch einen Elektro- bzw. Galvanoformungsprozess.

7. Das Verfahren zum Herstellen einer Brennkammer (2) eines Raketentriebwerks (1) gemäß einem der Ansprüche 1 bis 6, wobei die erste Schicht (30-1) eine Kupferschicht ist.

8. Das Verfahren zum Herstellen einer Brennkammer (2) eines Raketentriebwerks (1) gemäß einem der Ansprüche 1 bis 7, wobei der Schritt des Schichtens der LMD-Schicht (50) aufweist:
Schichten einer ersten LMD-Schicht (50-1) auf der Außen-Umfangsoberfläche (23) der äußeren Schicht (30) durch den LMD-Prozess, und
Schichten einer zweiten LMD-Schicht (50-2) auf der ersten LMD-Schicht (50-1).

9. Das Verfahren zum Herstellen einer Brennkammer (2) eines Raketentriebwerks (1) gemäß einem der Ansprüche 1 bis 8, wobei die LMD-Schicht (50) eine Spiralnaht (52) oder eine Ringnaht (52-1,52-2,52-3,52-3,52-4,52-5,52-6) aufweist.

10. Das Verfahren zum Herstellen einer Brennkammer (2) eines Raketentriebwerks (1) gemäß einem der Ansprüche 1 bis 9, wobei die LMD-Schicht (50) eine Legierungsschicht auf Nickelbasis ist.

11. Eine Brennkammer (2) eines Raketentriebwerks (1), mit:
einem Brennkammer-Innenrohr (20) mit Kühlgräben (24),
einer äußeren Schicht (30), die auf einer Außen-Umfangsoberfläche (23) des Brennkammer-Innenrohrs (20) angeordnet ist, um die Kühlgräben (24) des Brennkammer-Innenrohrs (20) abzudecken, und
einer LMD-Schicht (50), die auf einer Außen-Umfangsoberfläche (33) der äußeren Schicht (30) angeordnet ist,
wobei die äußere Schicht (30) aufweist:
eine erste Schicht (30-1), die auf der äußeren Umfangsoberfläche (23) des Brennkammer-Innenrohrs (20) angeordnet ist, und
eine Hochfestigkeitsschicht, die im Kontakt mit einer Innen-Umfangsoberfläche der LMD-Schicht (50) angeordnet ist und die eine Zugfestigkeit besitzt, die größer als die der ersten Schicht (30-1), und
wobei die erste Schicht (30-1) eine Kupferschicht ist und die Hochfestigkeitsschicht eine Nickelschicht ist.

12. Die Brennkammer (2) eines Raketentriebwerks (1) gemäß Anspruch 11, wobei ein Hauptmaterial der Hochfestigkeitsschicht und das der LMD-Schicht (50) dasselbe ist.

13. Ein Raketentriebwerk (1), das die Brennkammer (2) des Raketentriebwerks (1) gemäß einem der Ansprüche 11 oder 12 aufweist.

## Revendications

1. Procédé de fabrication d'une chambre de combustion (2) d'un moteur (1) de fusée, dans lequel :
on prépare un tube (20) intérieur de chambre de combustion, ayant des tranchées (24) de refroidissement ;
on prépare une couche (30) extérieure sur une surface (23) circonférentielle extérieure du tube (20) intérieur de la chambre de combustion pour recouvrir les tranchées (24) de refroidissement du tube (20) intérieur de la chambre de combustion et
on empile une couche (50) LMD sur la surface (33) circonférentielle extérieure de la couche (30) extérieur, par une opération LMD,
dans lequel le stade dans lequel on prévoit une couche (30) extérieure comprend :
empiler une première couche (30-1) sur la surface (25) circonférentielle extérieure du tube (20) intérieur de la chambre de combustion et
empiler une couche laser de petit facteur de réflexion comme couche la plus extérieure de la couche (30) extérieure et
dans lequel la couche laser de petit facteur de réflexion est une couche ayant un facteur de réflexion plus petit, pour un faisceau laser utilisé dans l'opération LMD, que la première couche (30-1).

2. Procédé de fabrication d'une chambre de combustion (2) d'un moteur (1) de fusée suivant la revendication 1, dans lequel une résistance à la traction de la couche laser ayant un petit facteur de réflexion est plus grande que celle de la première couche (30-1).

3. Procédé de fabrication d'une chambre de combustion (2) d'un moteur (1) de fusée suivant la revendication 1 ou 2, dans lequel l'empilage d'une couche laser ayant un petit facteur de réflexion comprend empiler la couche laser de petit facteur de réflexion par un procédé d'électroplacage.

4. Procédé de fabrication d'une chambre de combustion (2) d'un moteur (1) de fusée suivant l'une quelconque des revendications 1 à 3, dans lequel la couche laser de petit facteur de réflexion est une couche de nickel.

5. Procédé de fabrication d'une chambre de combustion (2) d'un moteur (1) de fusée suivant l'une quelconque des revendications 1 à 4, dans lequel un matériau principal de la couche laser de petit facteur de réflexion et un matériau principal de la couche (50) LMD sont les mêmes.

6. Procédé de fabrication d'une chambre de combustion (2) d'un moteur (1) de fusée suivant l'une quelconque des revendications 1 à 5, dans lequel le stade d'empilage d'une première couche comprend :
empiler la première couche (30-1) sur la surface (23) circonférentielle extérieure du tube (20) intérieur de la chambre de combustion par une opération d'électroformage.

7. Procédé de fabrication d'une chambre de combustion (2) d'un moteur (1) de fusée suivant l'une quelconque des revendications 1 à 6, dans lequel la première couche (30-1) est une couche de cuivre.

8. Procédé de fabrication d'une chambre de combustion (2) d'un moteur (1) de fusée suivant l'une quelconque des revendications 1 à 7, dans lequel le stade d'empilage de la couche (50) LMD comprend :
empiler une première couche (50-1) LMD sur la surface (33) circonférentielle extérieure de la couche (30) extérieure par l'opération LMD et
empiler une deuxième couche (50-2) LMD sur la première couche (50-1) LMD.

9. Procédé de fabrication d'une chambre de combustion (2) d'un moteur (1) de fusée suivant l'une quelconque des revendications 1 à 8, dans lequel la couche (50) LMD comprend un bourrelet (52) en spirale ou un bourrelet (52-1, 52-2, 52-3, 52-3, 52-4, 52-5, 52-6) annulaire.

10. Procédé de fabrication d'une chambre de combustion (2) d'un moteur (1) de fusée suivant l'une quelconque des revendications 1 à 9, dans lequel la couche (50) LMD est une couche en alliage à base de nickel.

11. Chambre de combustion (2) d'un moteur (1) de fusée, comprenant :
un tube (20) intérieur de chambre de combustion ayant des tranchées (24) de refroidissement ;
une couche (30) extérieure, disposée sur une surface (23) circonférentielle extérieure du tube (20) intérieur de la chambre de combustion, pour recouvrir les tranchées (24) de refroidissement du tube (20) intérieur de la chambre de combustion et
une couche (50) LMD, disposée sur une surface (33) circonférentielle extérieure de la couche (30) extérieure,
dans laquelle la couche (30) extérieure comprend :
une première couche (30-1), disposée sur la surface (23) circonférentielle extérieure du tube (20) intérieur de la chambre de combustion et
une couche de grande résistance en contact avec une surface circonférentielle intérieure de la couche (50) LMD et ayant une résistance à la traction plus grande que la première couche (30-1) et
dans lequel la première couche (30-1) est une couche de cuivre et la couche de grande résistance est une couche de nickel.

12. Chambre de combustion (2) d'un moteur (1) de fusée suivant la revendication 11, dans laquelle un matériau principal de la couche de grande résistance et celui de la couche (50) LMD sont les mêmes.

13. Moteur (1) de fusée, qui comprend la chambre de combustion (2) du moteur (1) de fusée suivant l'une quelconque de revendications 11 ou 12.
